# EUROPEAN PATENT APPLICATION

(11) **EP 3 758 438 A1**
(43) Date of publication of application: **30.12.2020**
(21) Application number: 19767860.0
(22) Date of filing: 01.03.2019
(51) Int. Cl.: H04W 84/20, H04W 84/12, H04W 84/22

(54) **COMMUNICATION DEVICE AND COMMUNICATION SYSTEM**

(30) Priority: 14.03.2018 JP 2018046336
(71) Applicant: Sony Corporation, 108-0075 Tokyo (JP)
(72) Inventor: SUGAYA, Shigeru, Tokyo 108-0075 (JP)
(74) Representative: D Young & Co LLP
(86) International application number: PCT/JP2019/008002
(87) International publication number: WO 2019/176578

(57) **Abstract**

The present technology relates to a communication apparatus and a communication system that make it possible to distribute functions of an access point in a wireless local area network to a plurality of communication apparatuses.

The communication apparatus of one aspect of the present technology controls transmission of a management frame including information representing that the communication apparatus itself is actable as an apparatus that is responsible for a function of access control of a wireless local area network, the transmission including transmission of a beacon frame, and manages information regarding apparatuses that are individually responsible for functions including the function of access control. Meanwhile, the communication apparatus of another aspect controls transmission of a management frame including information representing that the communication apparatus itself is actable as an apparatus that is responsible for a function of a gateway of a wireless local area network to an external network, and manages information regarding apparatuses that are individually responsible for functions including the function of the gateway. The present technology can be applied to a communication apparatus of a wireless local area network.

## Description

### [Technical Field]

The present technology relates to a communication apparatus and a communication system, and specifically to a communication apparatus and a communication system that make it possible to distribute functions of an access point in a wireless LAN to a plurality of communication apparatuses.

### [Background Art]

An access point of a wireless LAN includes a single communication apparatus in which various functions are incorporated. The communication apparatus that acts as the access point has a modem function for managing access to the Internet, a function as a central controlling station for controlling communication in the wireless LAN, and a function for managing communication apparatus connecting to the wireless LAN.

A communication apparatus that acts as the access point is necessitated to perform complicated control in order to implement a plurality of functions.

### [Citation List]

### [Patent Literature]

[PTL 1]
Japanese Patent Laid-open No. 2017-103666

### [Summary]

### [Technical Problem]

In recent years, communication apparatuses that are actable as an access point like a smartphone that incorporates a function called tethering have been and are increasing. In the case where a plurality of communication apparatuses that is actable as an access point exists in a same wireless LAN, if the functions of the access point can be distributed to the plurality of communication apparatuses, then it is possible to prevent the load from being concentrated on a single communication apparatus.

The present technology has been made in view of such a situation as described above and makes it possible to distribute functions of an access point in a wireless LAN to a plurality of communication apparatuses.

### [Solution to Problem]

The communication apparatus of the first aspect of the present technology includes a communication controlling unit configured to control transmission of a management frame including information representing that the communication apparatus itself is actable as an apparatus that is responsible for a function of access control of a wireless LAN, the transmission including transmission of a beacon frame, and a management unit configured to manage information regarding apparatuses that are individually responsible for functions including the function of access control.

The communication apparatus of the second aspect of the present technology includes a communication controlling unit configured to control transmission of a management frame including information representing that the communication apparatus itself is actable as an apparatus that is responsible for a function of a gateway of a wireless LAN to an external network, and a management unit configured to manage information regarding apparatuses that are individually responsible for functions including the function of the gateway.

The communication apparatus of the third aspect of the present technology includes a communication controlling unit configured to control reception of a management frame transmitted from a first apparatus and including information representing that the first apparatus is actable as an apparatus that is responsible for a function of access control of a wireless LAN, the transmission including transmission of a beacon frame, and a management unit configured to manage information regarding apparatuses that belong to the wireless LAN in which at least the first apparatus and a second apparatus that is responsible for a function of a gateway of the wireless LAN to an external network exist.

In the first aspect of the present technology, transmission of a management frame including information representing that the communication apparatus itself is actable as an apparatus that is responsible for a function of access control of the wireless LAN is controlled, the transmission including transmission of a beacon frame. Then, information regarding apparatuses that are individually responsible for functions including the function of access control is managed.

In the second aspect of the present technology, transmission of a management frame including information representing that the communication apparatus itself is actable as an apparatus that is responsible for a function of a gateway of the wireless LAN to an external network is controlled. Then, information regarding apparatuses that are individually responsible for functions including the function of the gateway is managed.

In the third aspect of the present technology, reception of a management frame transmitted from the first apparatus and including information representing that the first apparatus is actable as an apparatus that is responsible for a function of access control of the wireless LAN is controlled, the transmission including transmission of a beacon frame. Then, information regarding apparatuses that belong to the wireless LAN in which at least the first apparatus and the second apparatus that is responsible for a function of a gateway of the wireless LAN to an external network exist is controlled.

### [Advantageous Effect of Invention]

According to the present technology, it is possible to distribute functions of an access point in a wireless LAN to a plurality of communication apparatuses.

It is to be noted that the advantageous effect described here is not necessarily restrictive, and any advantageous effect described in the present disclosure may be available.

### [Brief Description of Drawings]

[FIG. 1]

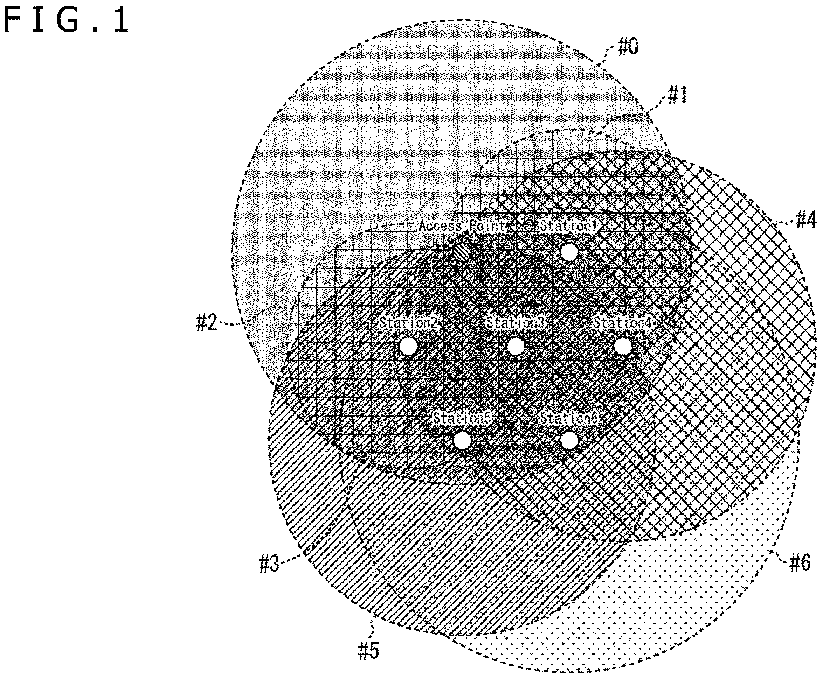

   FIG. 1 is a view depicting an example of a configuration of a network in a conventional system of a wireless LAN.
[FIG. 2]

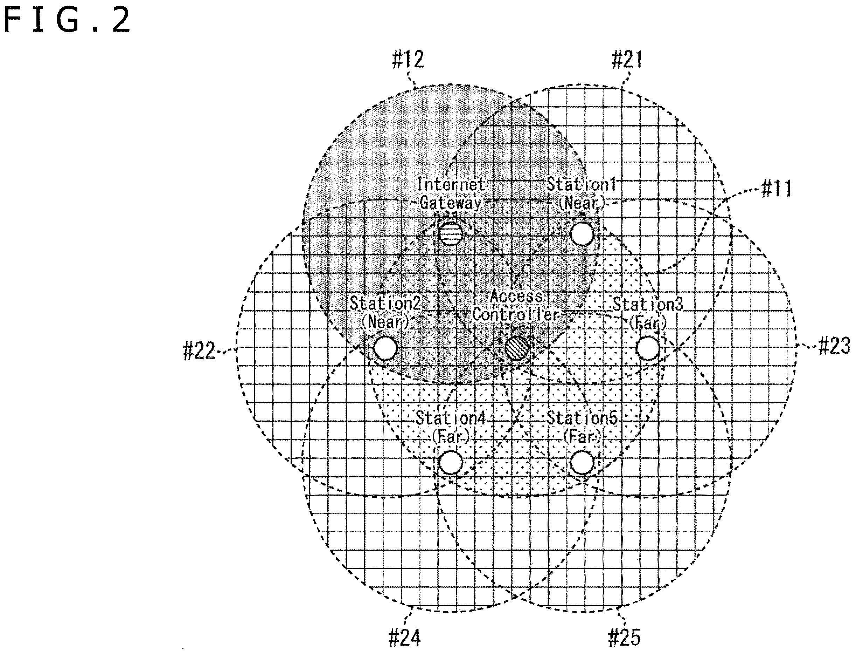

   FIG. 2 is a view depicting an example of a configuration of a network in which functions of an AP are distributed according to an embodiment of the present technology.
[FIG. 3]

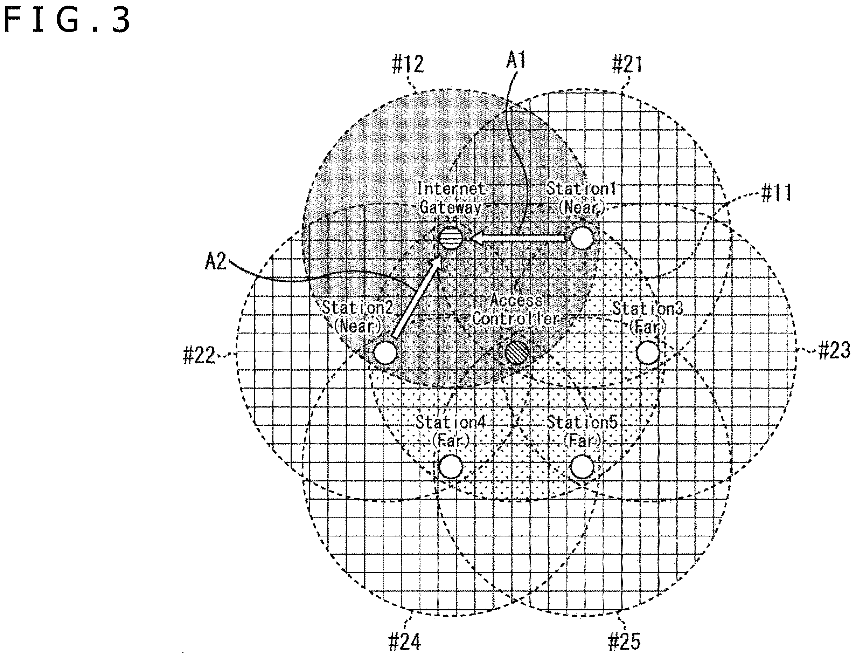

   FIG. 3 is a view depicting an example of a flow of uplink data transmitted from a Near Station.
[FIG. 4]

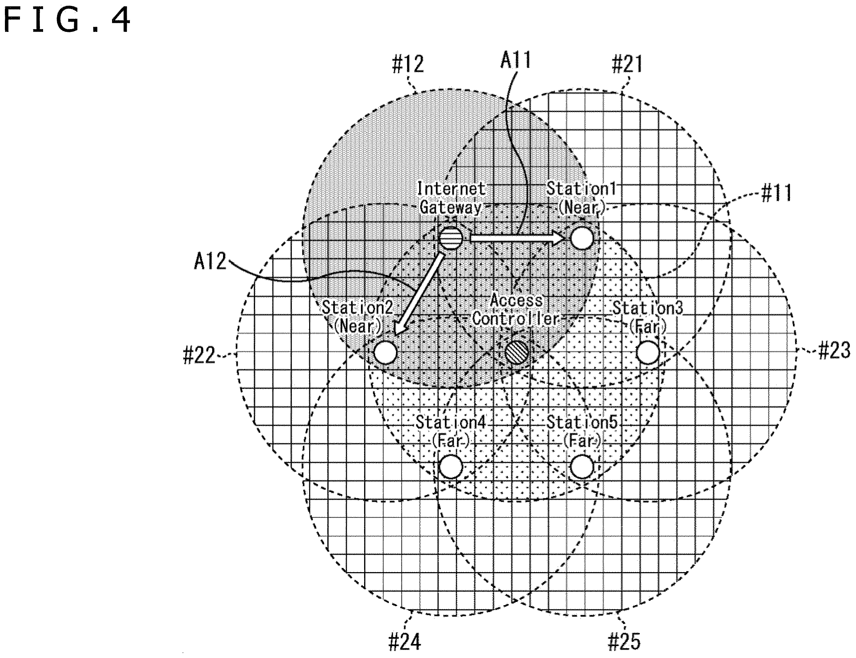

   FIG. 4 is a view depicting an example of a flow of downlink data to a Near Station.
[FIG. 5]

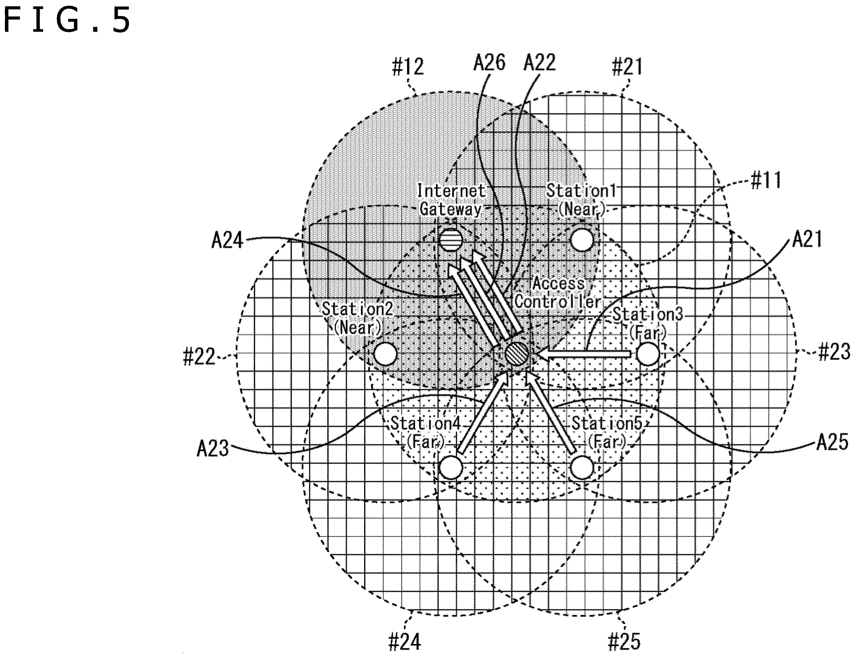

   FIG. 5 is a view depicting an example of a flow of uplink data transmitted from a Far Station.
[FIG. 6]

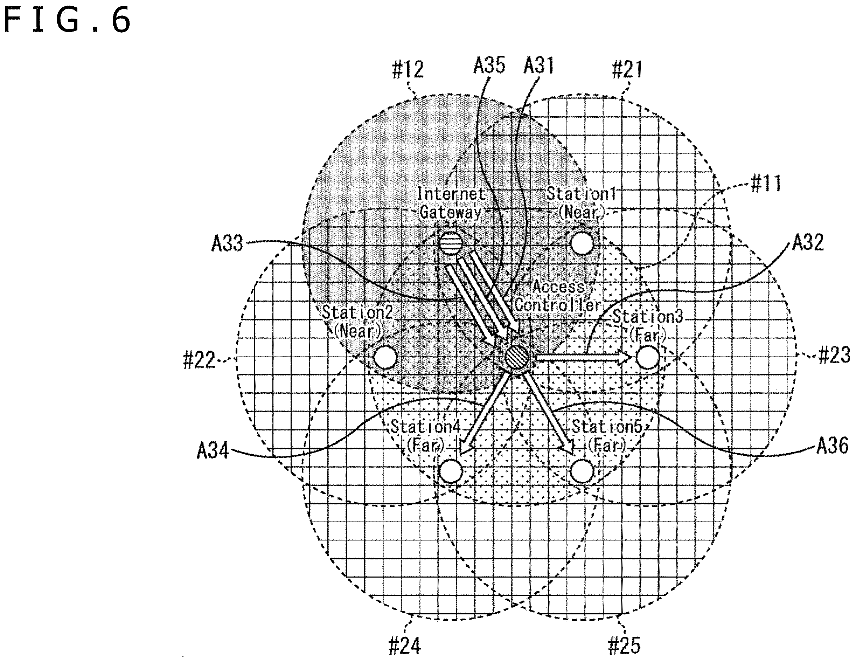

   FIG. 6 is a view depicting an example of a flow of downlink data to a Far Station.
[FIG. 7]

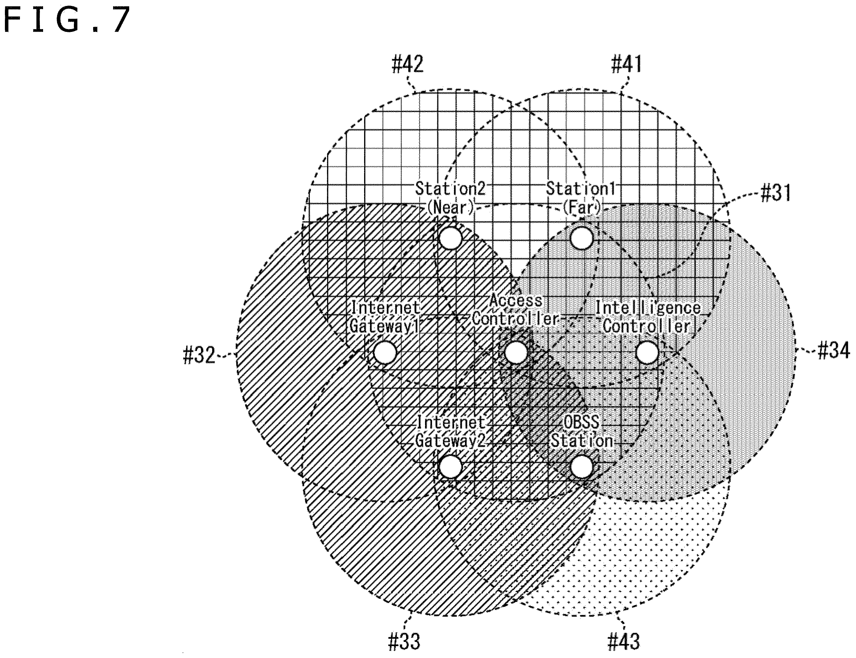

   FIG. 7 is a view depicting another example of a configuration of a network in which functions of an AP are distributed.
[FIG. 8]

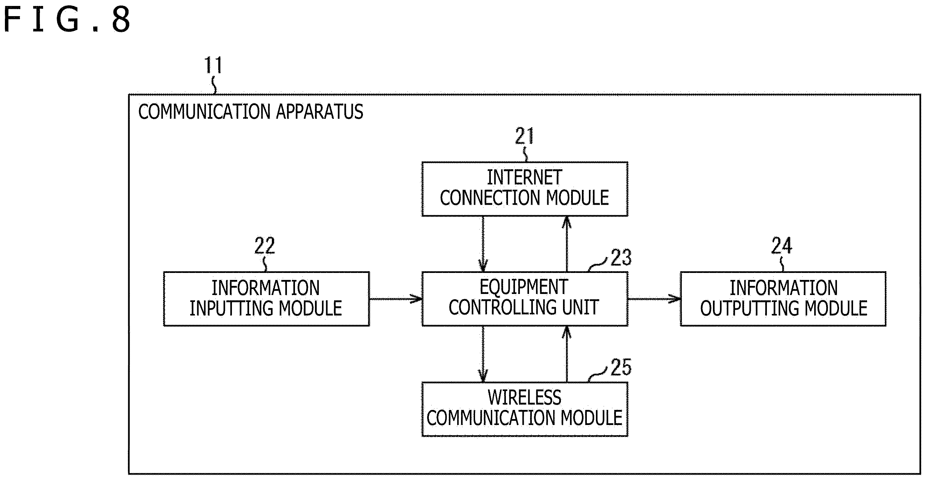

   FIG. 8 is a block diagram depicting an example of a configuration of a communication apparatus.
[FIG. 9]

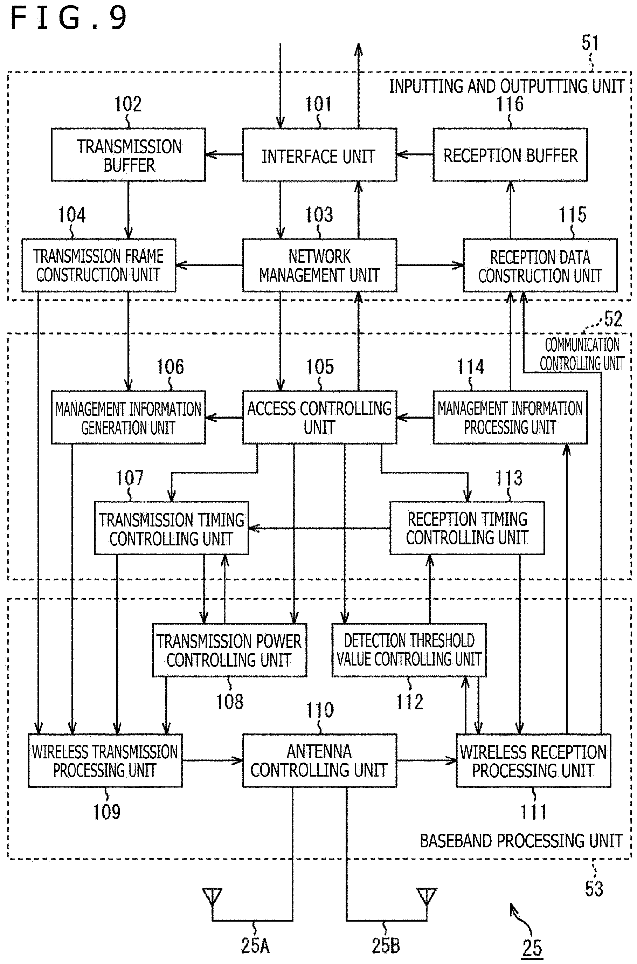

   FIG. 9 is a block diagram depicting an example of a configuration of a wireless communication module.
[FIG. 10]

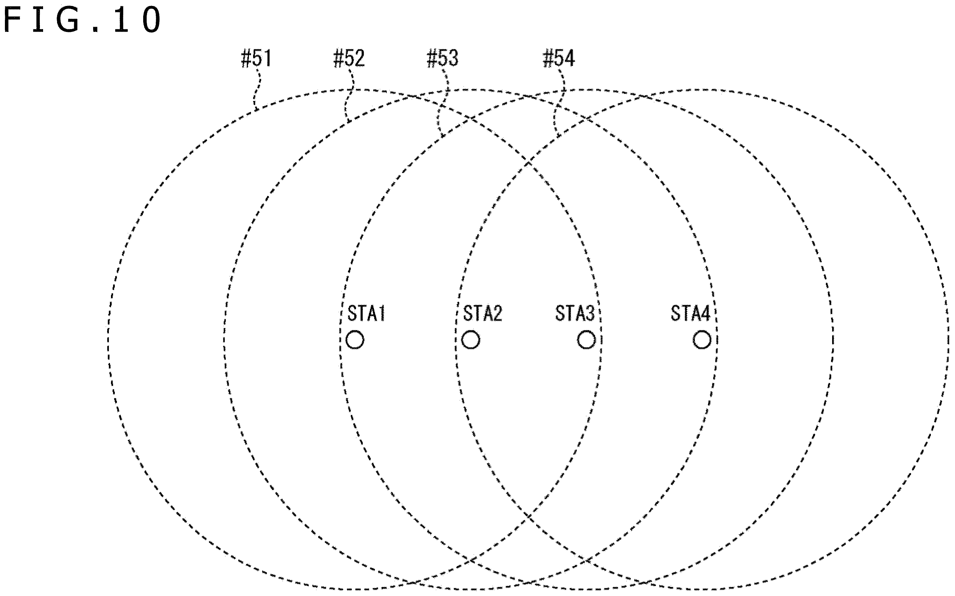

   FIG. 10 is a view depicting an example of a positional relation of communication apparatuses.
[FIG. 11]

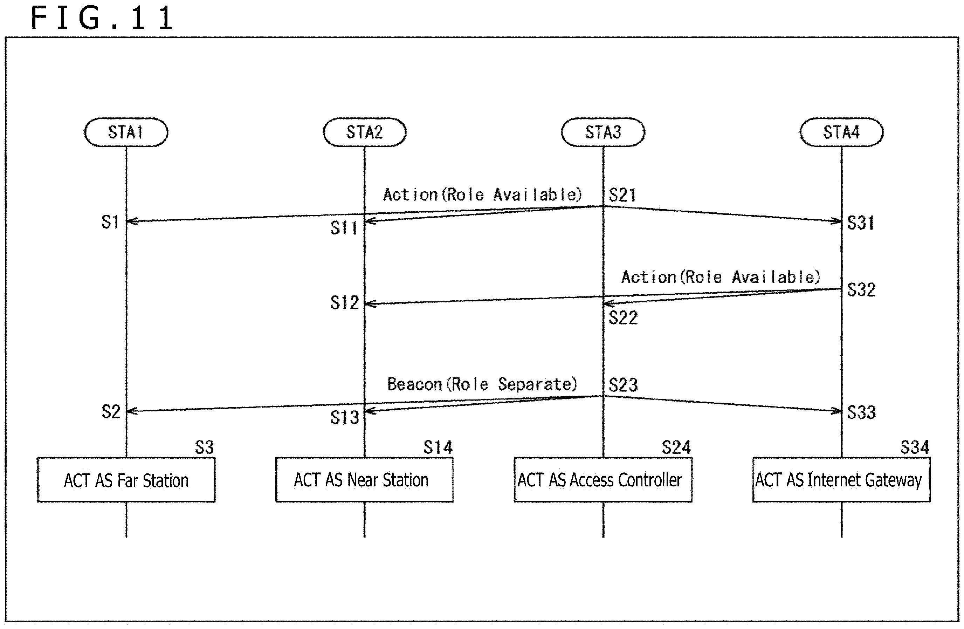

   FIG. 11 is a sequence diagram illustrating a series of actions for deciding a role of a communication apparatus.
[FIG. 12]

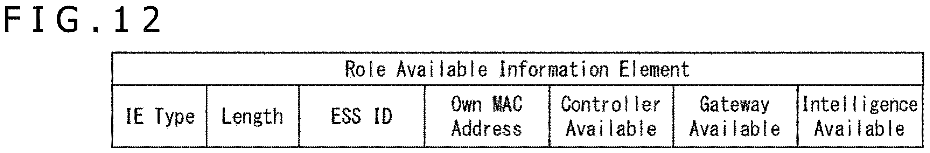

   FIG. 12 is a view depicting an example of a configuration of a Role Available Information Element.
[FIG. 13]

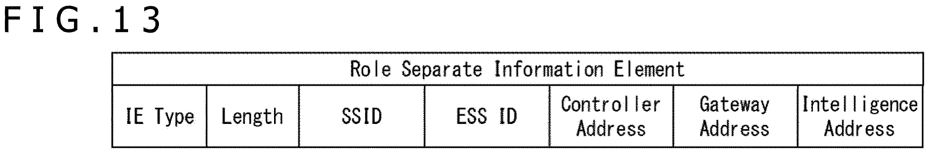

   FIG. 13 is a view depicting an example of a configuration of a Role Separate Information Element.
[FIG. 14]

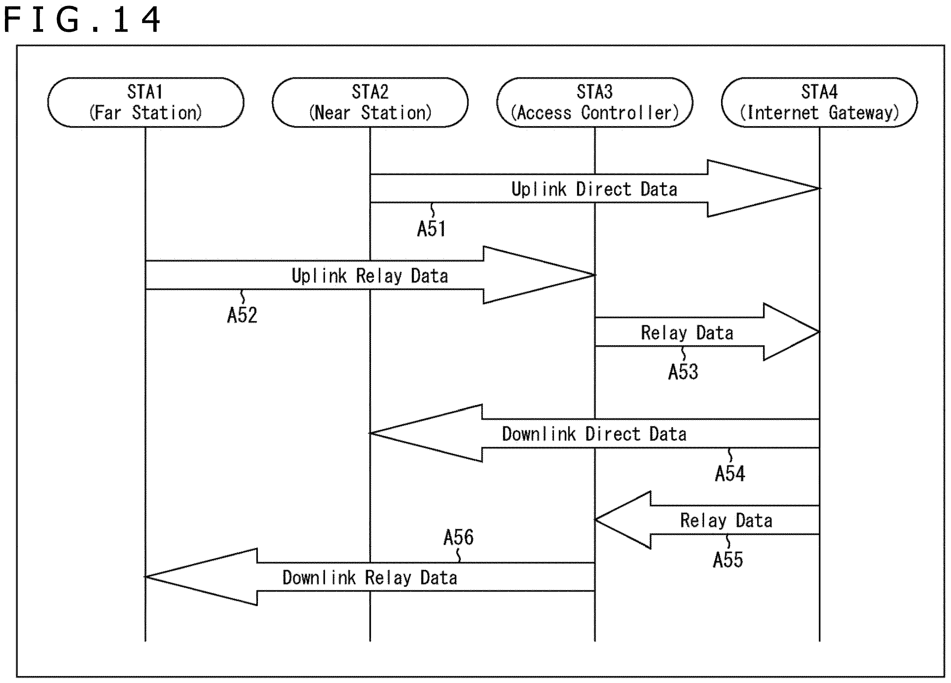

   FIG. 14 is a sequence diagram illustrating a flow of communication between communication apparatuses.
[FIG. 15]

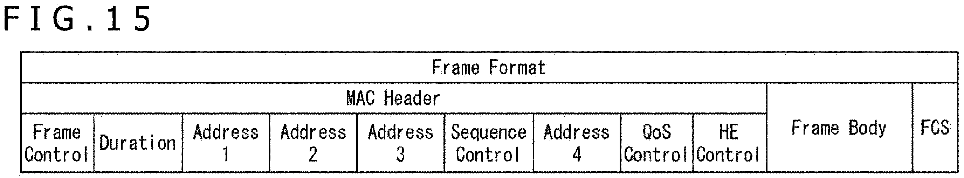

   FIG. 15 is a view depicting an example of a configuration of a frame format used in transmission and reception of data.
[FIG. 16]

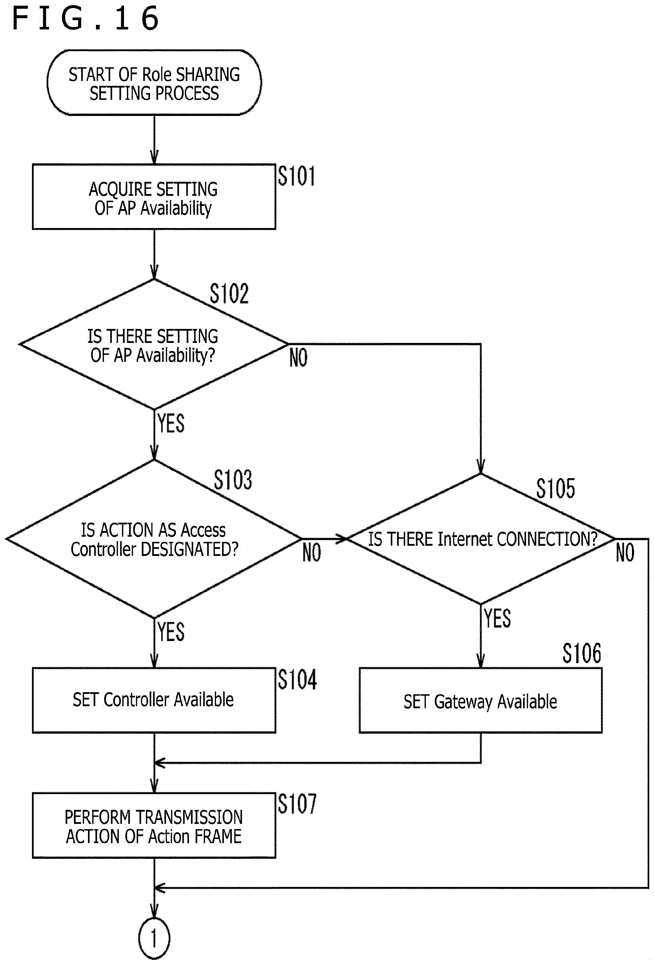

   FIG. 16 is a flowchart illustrating a function sharing process of a communication apparatus.
[FIG. 17]

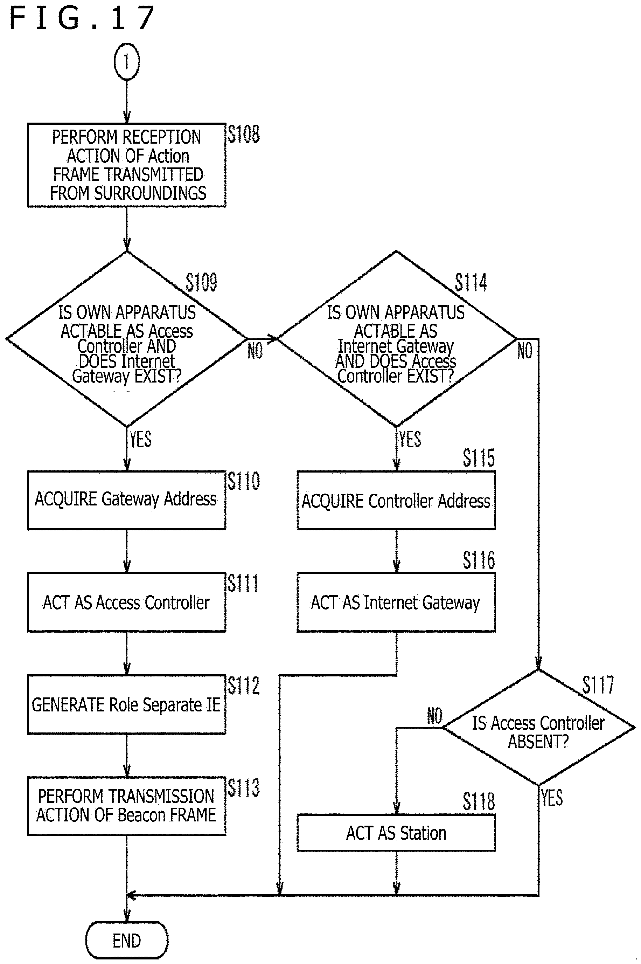

   FIG. 17 is a flowchart continuing from FIG. 16 and illustrating the function sharing process of a communication apparatus.
[FIG. 18]

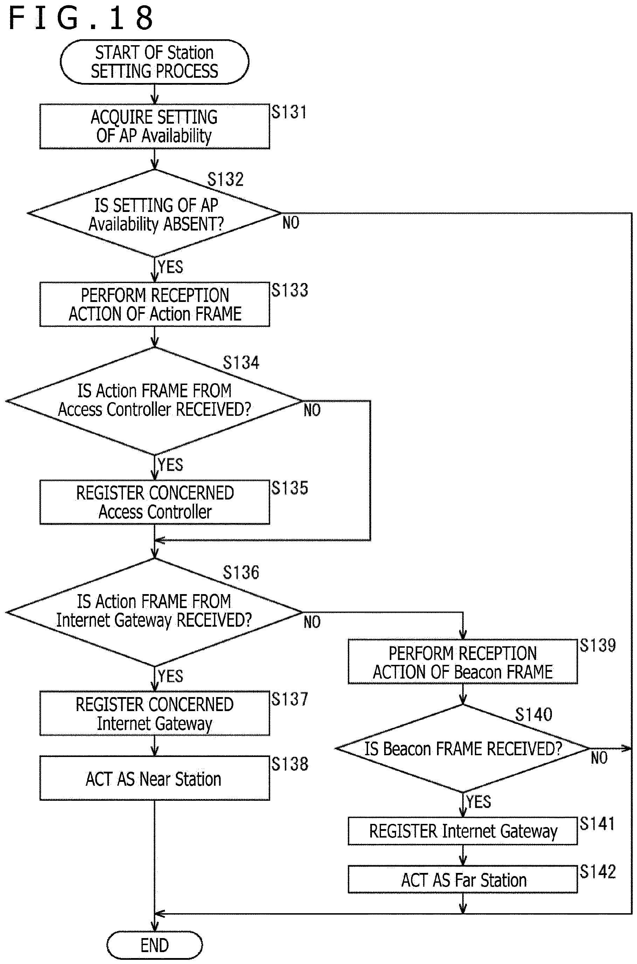

   FIG. 18 is a flowchart illustrating a setting process of a communication apparatus.
[FIG. 19]

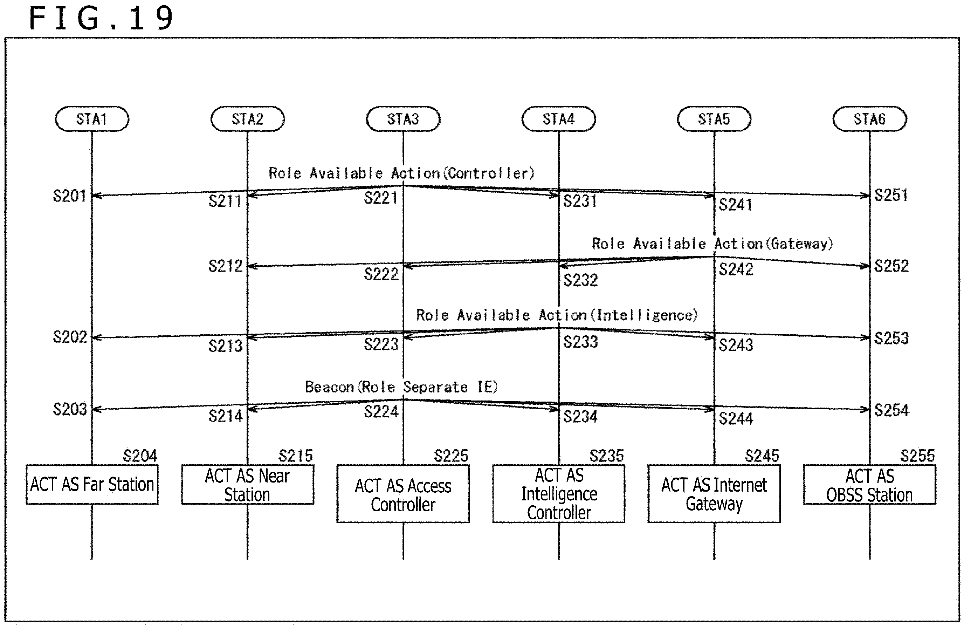

   FIG. 19 is a sequence diagram illustrating another sequence of actions for deciding a role of a communication apparatus.
[FIG. 20]

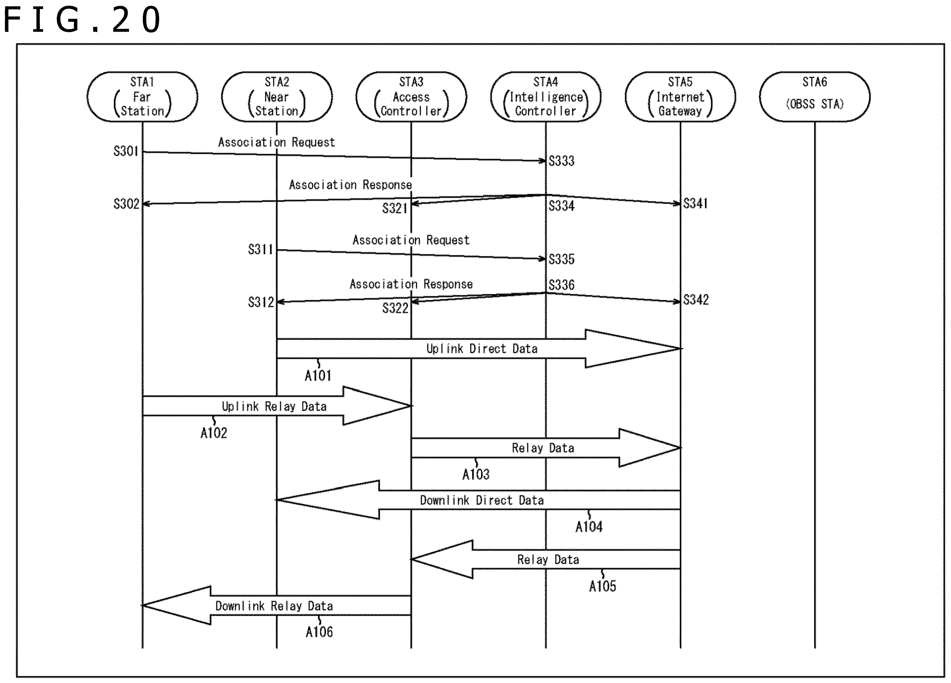

   FIG. 20 is a sequence diagram illustrating another flow of communication between communication apparatuses.
[FIG. 21]

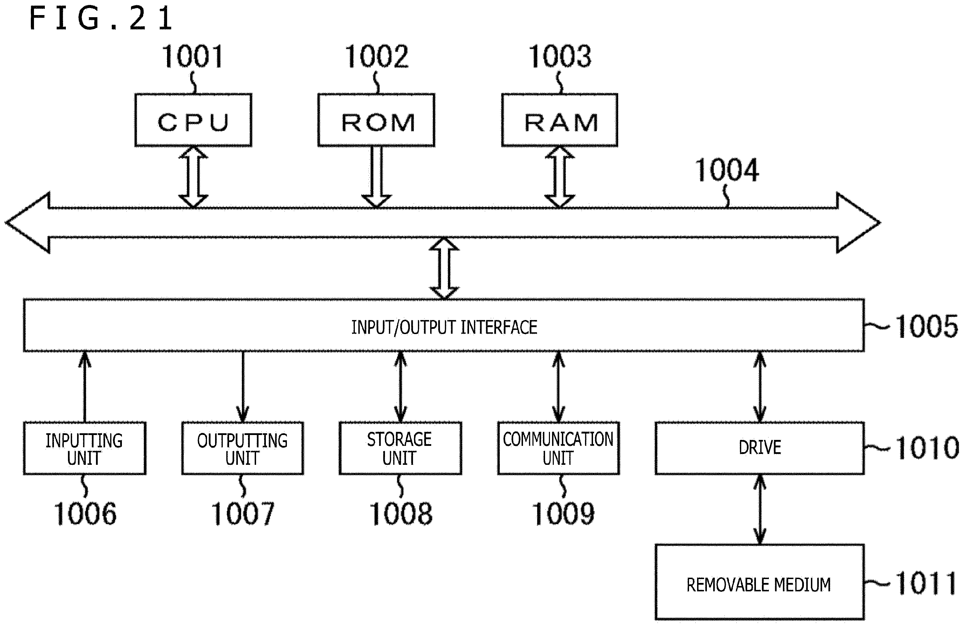

   FIG. 21 is a block diagram depicting an example of a configuration of a computer.

### [Description of Embodiment]

In the following, a mode for carrying out the present technology is described. The description is given in the following order.
1. Example of Configuration of Conventional Network
2. Example of Configuration of Network According to Embodiment of Present Technology
3. Example of Configuration of Communication Apparatus
4. Example of General Action of Network
5. Action of Each Communication Apparatus
6. Different Example of General Action of Network
7. Modification

### <Example of Configuration of Conventional Network>

FIG. 1 is a view depicting an example of a configuration of a network of a conventional wireless LAN.

The configuration depicted in FIG. 1 is a configuration in the case where control of an overall network is performed by one communication apparatus. Stations 1 to 6 exist within a reaching range of radio waves of an access point (Access Point) that is a communication apparatus that performs control of the overall network. Seven small circles depicted in FIG. 1 individually indicate a communication apparatus having functions of communication of a wireless LAN in compliance with a predetermined standard of, for example, IEEE 802.11.

A Station is a communication apparatus that acts as a communication terminal belonging to the network managed by the Access Point and becomes a client. A BSS (Basic Service Set) includes the Access Point and the Station.

A circle #0 indicated by a broken line represents a communicatable range of the Access Point, namely, a reaching range of radio waves. The range represented by the circle #0 is a reaching range of radio waves, for example, in the case where permissible maximum transmission power is used.

Further, circles #1 to #6 individually indicated by a broken line represent a reaching range of radio waves of the Stations 1 to 6. The Stations 1 to 3 exist in the neighborhood of the Access Point, and the Stations 4 to 6 exist at positions spaced from the Access Point.

The Stations 1 to 3 existing in the neighborhood of the Access Point can perform communication with the Access Point even if the transmission power is suppressed as indicated by the circles #1 to #3 centered at the Stations 1 to 3, respectively.

On the other hand, the Stations 4 to 6 existing at positions spaced from the Access Point cannot perform communication with the Access Point if radio waves by maximum transmission power are not used without suppressing the transmission power as indicated by the circles #4 to #6 centered at the Stations 4 to 6, respectively.

In this manner, in communication between the Access Point and a Station existing at a position spaced from the Access Point, it is difficult to suppress the transmission power of radio waves, and a signal reaches ranges indicated by the circles #0 and #4 to #6. In other words, in the case where the Access Point exists at an end of the network, a signal reaches the outside of a range that includes all communication apparatuses (for example, the range of the circle #3).

In this manner, in the case where one communication apparatus acts as the Access Point and performs control of the overall network, even if such control as to suppress the transmission power of radio waves is performed by each communication apparatus, the effect of the control cannot be obtained sufficiently depending upon the position of the Access Point.

The Access Point is hereinafter suitably referred to as an AP. Further, a Station is hereinafter referred to as an STA.

<Example of Configuration of Network According to One Embodiment of Present Technology>

FIG. 2 is a view depicting an example of a configuration of a network in which functions of the AP are distributed according to one embodiment of the present technology.

In the example of FIG. 2, a communication apparatus existing in the proximity of the center of the network acts as an Access Controller, and an upper left communication apparatus connectable to an external network such as the Internet acts as an Internet Gateway.

In particular, in the example of FIG. 2, the communication apparatus that acts as the Access Controller is responsible for a function of access control of the network including transmission of a management frame from among functions of a conventional AP. In the management frame transmitted from the Access Controller, a Beacon frame, an Action frame, a Management frame, and a Trigger frame are included.

As hereinafter described, the Beacon frame includes information regarding an address of an individual communication apparatus configuring the network. By a signal transmitted from the Access Controller, access to the Access Controller and the Internet Gateway by the individual communication apparatus is controlled and the range of the network is specified.

Further, the communication apparatus that acts as the Internet Gateway is responsible for functions of a gateway to an external network from among functions of a conventional AP.

Where a communication apparatus different from a communication apparatus that acts as the Internet Gateway acts as the Internet Gateway, an STA belonging to the network can perform necessary communication such as communication through the Internet. The Internet Gateway performs communication with a server managed, for example, by a service provider that provides a connection service to the Internet, and controls transmission and reception of uplink data and downlink data. The uplink data is data from an STA belonging to the network to an external apparatus, and the downlink data is data from an external apparatus to an STA belonging to the network.

By causing functions of the AP to be shared by a plurality of communication apparatuses in this manner, the network can be managed with increased efficiency. The functions of the AP at least include a function of access control of the network including transmission of a Beacon frame and a function of the gateway to an external network.

Further, since it is sufficient if radio waves reach a range centered at the Access Controller, the individual communication apparatus can suppress the transmission power of the radio waves.

For example, even if the transmission power of radio waves is suppressed, the Access Controller can transmit a signal of a Beacon frame and so forth to a range indicated by a circle #11 that includes all of the communication apparatuses.

Also, the Internet Gateway and the STAs 1 to 5 can perform communication with the Access Controller using radio waves of minimum required transmission power. A circle #12 represents a reaching range of radio waves of the Internet Gateway, and circles #21 to #25 individually represent a reaching range of radio waves of the STAs 1 to 5, respectively.

The reaching range of radio waves of each communication apparatus is a smaller range than that indicated by the circle #0 of FIG. 1 including the position of a neighboring communication apparatus. In particular, a network of a wireless LAN can be constructed in a small range centered at the Access Controller.

The Access Controller (access controller) is hereinafter suitably referred to as an AC. Further, the Internet Gateway (Internet gateway) is hereinafter suitably referred to as an IG.

In the network of FIG. 2 constructed in such a small range as described above, an STA 1 and an STA 2 existing within a reaching range of radio waves of the IG and capable of performing communication directly with the IG individually act as a Near Station.

Further, the STAs 3 to 5 that are communication apparatuses that cannot perform communication directly with the IG but exist in a reaching range of radio waves of the AC individually act as a Far Station.

It is specified on the basis of a positional relation with the IG whether the STA acts as a Near Station or acts as a Far Station.

FIG. 3 is a view depicting an example of a flow of uplink data transmitted from the Near Station.

Uplink data transmitted from the STA 1 that is a Near Station to an external apparatus is directly received by the IG and is transmitted from the IG to an external apparatus that is a transmission destination as indicated by a white arrow mark A1. The external apparatus is an apparatus connected to a network that is on the outside of the network depicted in FIG. 3 such as an apparatus on the Internet.

Further, uplink data transmitted from the STA 2 to an external apparatus is received directly by the IG and is transmitted from the IG to the external apparatus that is a transmission destination as indicated by a white arrow mark A2.

FIG. 4 is a view depicting an example of a flow of downlink data to the Near Station.

Downlink data to the STA 1 transmitted from an external apparatus and received by the IG is directly transmitted from the IG to the STA 1 as indicated by a white arrow mark A11. Meanwhile, downlink data to the STA 2 transmitted from an external apparatus and received by the IG is directly transmitted from the IG to the STA 2 as indicated by a white arrow mark A12.

In this manner, the STA 1 and the STA 2 that individually act as a Near Station exist in a reaching range of radio waves of the IG and can perform communication directly with the IG.

FIG. 5 is a view depicting an example of a flow of uplink data transmitted from the Far Station.

Uplink data transmitted to an external apparatus from the STA 3 that is a Far Station is received by the IG relayed by the AC and is transmitted from the IG to the external apparatus that is a transmission destination as indicated by white arrow marks A21 and A22.

Also uplink data transmitted to an external apparatus from the STAs 4 and 5 is received by the IG relayed by the AC and is transmitted from the IG to the external apparatus that is a transmission destination as indicated by white arrow marks A23 and A24 and white arrow marks A25 and A26.

FIG. 6 is a view depicting an example of a flow of downlink data to the Far Station.

Downlink data to the STA 3 transmitted from an external apparatus and received by the IG is transmitted from the IG to the STA 3 relayed by the AC as indicated by white arrow marks A31 and A32.

Also, downlink data to the STAs 4 and 5 transmitted from an external apparatus and received by the IG is transmitted to the STAs 4 and 5 relayed by the AC from the IG as indicated by white arrow marks A33 and A34 and white arrow marks A35 and A36.

In this manner, the STA 3, STA 4, and STA 5 each acting as a Far Station exist in a reaching range of radio waves of the AC and can perform communication with the IG relayed by the AC.

In a network in which functions of the AP are shared by a plurality of communication apparatuses, transmission and reception of uplink data/downlink are performed in such a manner as described above.

By causing part of functions of a conventional AP to be shared by a communication apparatus that is actable as the AC and exists at an optimum position, an effective network can be constructed in a necessary and sufficient range desired by a user.

In particular, by designating a communication apparatus existing in the proximity of a central position of a range desired by the user as an apparatus that is responsible for part of functions of the AC, communication between the communication apparatus is performed effectively in such a manner as described above.

Further, by causing part of functions of a conventional AP to be shared by a communication apparatus that is actable as the IG, action optimized for access to the Internet network can be performed.

FIG. 7 is a view depicting another example of a configuration of a network in which functions of an AP are distributed.

FIG. 7 depicts a configuration in the case where functions of an AP are further subdivided and part of the functions of the AP are shared by a different communication apparatus.

In the example of FIG. 7, a communication apparatus existing substantially at the center acts as the Access Controller, and a communication apparatus on the right of the AC acts as the Intelligence Controller (intelligence controller). The Intelligence Controller is hereinafter suitably referred to as an IC.

A communication apparatus that acts as the IC performs an authentication process (Authentication) in the network and processes relating to entry (Association) into the network. In particular, the communication apparatus acting as the IC has an authentication function in the network and a function for processing an entry request into the network from among functions of a conventional AP.

In this manner, it is possible to further subdivide functions of an AP and cause a different apparatus to share the functions. Not both the authentication function in a network and the function for processing an entry request into the network may be shared by one communication apparatus but one of the authentication function in the network or the function for processing an entry request may be shared by one communication apparatus.

In this manner, the authentication function and so forth of the network can be shared by a communication apparatus having high processing capability.

Further, in the example of FIG. 7, a communication apparatus on the left of the AP acts as an Internet Gateway 1, and a communication apparatus on the lower left acts as an Internet Gateway 2.

In this manner, in the case where a plurality of communication apparatuses that is connectable to an external network exists, it is possible to cause a plurality of communication apparatuses to have a function of an IG. In the case where a plurality of IGs exists, an IG to be connected is selected by each of STAs according to a connection cost to the network and so forth.

In the example of FIG. 7, a circle #31 represents a reaching range of radio waves of the AC. Circles #32 and #33 represent reaching ranges of radio waves of the Internet Gateway 1 and the Internet Gateway 2. A circle #34 represents a reaching range of radio waves of the IC.

A circle #41 represents a reaching range of radio waves of the STA 1 that is a Far Station. A circle #42 represents a reaching range of radio waves of the STA 2 that is a Near Station. In the case where a plurality of IGs exists, an STA existing in a reaching range of radio waves of one of the IGs acts as the Near Station. Meanwhile, an STA that does not exist in a reaching range of radio waves of any of the IGs acts as the Far Station. A circle #43 represents a reaching range of radio waves of an OBSS (Overlapping BSS) Station.

Also, in the example of FIG. 7, the reaching range of radio waves of each of the communication apparatus is a small range including the position of a neighboring communication apparatus. It is possible to construct a network of a wireless LAN in a small range centered at an Access Controller.

For example, a network having such a configuration as described above is constructed in a predetermined area of a user's own home, an office or the like. Individual communication apparatuses are apparatuses having functions of wireless communication that comply with a predetermined standard of IEEE 802.11 such as a portable terminal like a smartphone or a tablet terminal, a PC, a game machine, a television receiver, or a router.

### <Example of Configuration of Communication Apparatus>

FIG. 8 is a block diagram depicting an example of a configuration of the communication apparatus.

A communication apparatus 11 depicted in FIG. 8 is an apparatus that acts as an AC, an IG, an IC, a Near Station, a Far Station or the like.

The communication apparatus 11 includes, for example, from an Internet connection module 21, an information inputting module 22, an equipment controlling unit 23, an information outputting module 24, and a wireless communication module 25. The components depicted in FIG. 8 can be suitably omitted in accordance with functions to be shared by each communication apparatus 11.

In the case where the communication apparatus 11 acts as the IG, the Internet connection module 21 functions as a communication modem for connecting to the Internet. In particular, the Internet connection module 21 outputs data received through the Internet to the equipment controlling unit 23 and transmits data supplied from the equipment controlling unit 23 to an apparatus of a transmission destination through the Internet.

The information inputting module 22 detects a manipulation thereof by a user and outputs information representative of the substance of the manipulation of the user to the equipment controlling unit 23. For example, in the case where a button, a keyboard, a touch panel or the like provided on a housing of the communication apparatus 11 is manipulated, the information inputting module 22 outputs a signal according to the manipulation of the user to the equipment controlling unit 23.

The equipment controlling unit 23 includes a CPU (Central Processing Unit), a ROM (Read Only Memory), a RAM (Random Access Memory) and so forth. The equipment controlling unit 23 executes a predetermined program by the CPU and controls general action of the communication apparatus 11 in response to a signal or the like supplied from the information inputting module 22.

For example, the equipment controlling unit 23 outputs downlink data supplied from the Internet connection module 21 to the wireless communication module 25 so as to be transmitted to a communication apparatus of a transmission destination. Further, the equipment controlling unit 23 acquires uplink data transmitted from a communication apparatus belonging to the network and received by the wireless communication module 25 and outputs the uplink data to the Internet connection module 21. The equipment controlling unit 23 suitably controls the information outputting module 24 to output predetermined information.

The information outputting module 24 includes a display unit including a liquid crystal panel or the like, a speaker, an LED (Light emitting Diode) and so forth. The information outputting module 24 outputs various kinds of information such as information representative of an action state of the communication apparatus 11 and information obtained through the Internet, on the basis of information supplied from the equipment controlling unit 23 to present the information to the user.

The wireless communication module 25 is a module of the wireless LAN that complies with a predetermined standard. The wireless communication module 25 is configured, for example, from an LSI chip.

The wireless communication module 25 transmits data supplied from the equipment controlling unit 23 to a different apparatus using a frame of a predetermined format and receives a signal transmitted from a different apparatus to output data extracted from the received signal to the equipment controlling unit 23.

FIG. 9 is a block diagram depicting an example of a functional configuration of the wireless communication module 25.

As depicted in FIG. 9, the wireless communication module 25 includes an inputting and outputting unit 51, a communication controlling unit 52, and a baseband processing unit 53.

The inputting and outputting unit 51 includes an interface unit 101, a transmission buffer 102, a network management unit 103, a transmission frame construction unit 104, a reception data construction unit 115, and a reception buffer 116.

The communication controlling unit 52 includes an access controlling unit 105, a management information generation unit 106, a transmission timing controlling unit 107, a reception timing controlling unit 113, and a management information processing unit 114.

The baseband processing unit 53 includes a transmission power controlling unit 108, a wireless transmission processing unit 109, an antenna controlling unit 110, a wireless reception processing unit 111, and a detection threshold value controlling unit 112.

The interface unit 101 of the inputting and outputting unit 51 functions as an interface for exchanging data of a predetermined signal format with the equipment controlling unit 23 of FIG. 8. For example, the interface unit 101 outputs data of a transmission target supplied from the equipment controlling unit 23 to the transmission buffer 102. Further, the interface unit 101 outputs reception data from a different communication apparatus 11 stored in the reception buffer 116 to the equipment controlling unit 23.

The transmission buffer 102 temporarily stores data of a transmission target. The data of a transmission target stored in the transmission buffer 102 is read out at a predetermined timing by the transmission frame construction unit 104.

The network management unit 103 manages functions shared by the own apparatus in the network. For example, in the case where the communication apparatus 11 is responsible for functions of the AC, the network management unit 103 manages the addresses of the communication apparatus 11 configuring the network.

Further, the network management unit 103 manages functions for which the other communication apparatus 11 belonging to the network such as the communication apparatus 11 that acts as the AC and the communication apparatus 11 that acts as the IG are responsible. The management of the network by the network management unit 103 is performed on the basis of information supplied from the interface unit 101 and the access controlling unit 105.

The network management unit 103 outputs various kinds of information such as an address to each of the transmission frame construction unit 104, the access controlling unit 105, and the reception data construction unit 115 as occasion demands.

The transmission frame construction unit 104 generates a data frame for transmitting data stored in the transmission buffer 102 and outputs the data frame to the wireless transmission processing unit 109.

The access controlling unit 105 of the communication controlling unit 52 performs various kinds of control in accordance with functions that are managed by the network management unit 103 and for which the own apparatus is responsible. For example, in the case where the own apparatus is to act as the AC, the access controlling unit 105 outputs management information that is information for being placed into a management frame to the management information generation unit 106.

The access controlling unit 105 performs access control in accordance with a predetermined communication protocol on the basis of information supplied from the network management unit 103 and the management information processing unit 114.

The management information generation unit 106 generates a management frame including management information supplied from the access controlling unit 105 and outputs the management frame to the wireless transmission processing unit 109.

The transmission timing controlling unit 107 controls the transmission timing of a frame by the wireless transmission processing unit 109. The transmission timing is designated, for example, by the access controlling unit 105.

The transmission power controlling unit 108 of the baseband processing unit 53 controls the transmission power of radio waves under the control of the access controlling unit 105 and the transmission timing controlling unit 107.

For example, the transmission power of radio waves of the communication apparatus 11 that acts as the AC is suppressed to a level with which the communication apparatus 11 can directly perform communication with all communication apparatuses 11 belonging to the network. Meanwhile, the transmission power of radio waves of the communication apparatuses 11 that are responsible for functions other than those of the AC is suppressed to a level with which they can directly perform communication at least with the AC.

The wireless transmission processing unit 109 converts a data frame generated by the transmission frame construction unit 104 and a management frame generated by the management information generation unit 106 into a baseband signal. Further, the wireless transmission processing unit 109 performs various signal processes such as a modulation process for the baseband signal and supplies the baseband signal subjected to the signal processes to the antenna controlling unit 110.

The antenna controlling unit 110 includes a plurality of antennas connected to each other including antennas 25A and 25B. The antenna controlling unit 110 transmits a signal supplied thereto from the wireless transmission processing unit 109 from the antenna 25A. Further, the antenna controlling unit 110 outputs a signal supplied thereto from the antenna 25B in response to reception of radio waves transmitted from a different apparatus to the wireless reception processing unit 111.

The wireless reception processing unit 111 detects a preamble of a frame transmitted in a predetermined format from a signal supplied from the antenna controlling unit 110, and receives data configuring a header and a data part following the preamble. The wireless reception processing unit 111 outputs data of a management frame such as a Beacon frame or a Trigger frame to the management information processing unit 114 and outputs data of a data frame transmitted from a different communication apparatus 11 to the reception data construction unit 115.

The detection threshold value controlling unit 112 sets a threshold value, which is to be used as a reference for detection of a signal such as a preamble, to the wireless reception processing unit 111. In the case where, for example, control of the transmission power of radio waves is to be performed in the network, the setting of a threshold value by the detection threshold value controlling unit 112 is performed under the control of the access controlling unit 105.

The reception timing controlling unit 113 of the communication controlling unit 52 controls the reception timing of a frame by the wireless reception processing unit 111. The reception timing is designated, for example, by the access controlling unit 105. Information regarding the reception timing of a frame is suitably supplied to the transmission timing controlling unit 107.

The management information processing unit 114 analyzes a management frame including data supplied from the wireless reception processing unit 111. In the case where the own apparatus is designated as a transmission destination of the management fame, the management information processing unit 114 extracts a parameter placed in the management frame and analyzes the substance of the parameter. The management information processing unit 114 outputs information regarding a result of the analysis to the access controlling unit 105 and the reception data construction unit 115.

The reception data construction unit 115 of the inputting and outputting unit 51 removes a header from a data frame including data supplied from the wireless reception processing unit 111 to extract a data part. The reception data construction unit 115 outputs data included in the extracted data part, as reception data, to the reception buffer 116.

The reception buffer 116 temporarily stores reception data supplied from the reception data construction unit 115. The reception data stored in the reception buffer 116 is read out at a predetermined timing by the interface unit 101 and outputted to the equipment controlling unit 23.

The wireless communication module 25 includes the inputting and outputting unit 51, the communication controlling unit 52, and the baseband processing unit 53 having such units as described above. In the case where functions of the AP are to be shared by a plurality of communication apparatuses 11, action of the units is changed according to functions for which the individual communication apparatuses 11 are responsible.

### <Example of General Action of Network>

Here, action of the network including communication apparatuses 11 having such a configuration as described above is described.

The following description is given assuming that the STAs 1 to 4 that are communication apparatuses 11 are in a positional relation lined up in order from the left as depicted in FIG. 10. Circles #51 to #54 indicate reaching ranges of the STAs 1 to 4, respectively.

In this example, although each STA can directly perform communication with an STA two STAs ahead, it cannot communicate with any STA after that. In particular, the STA 1 and the STA 4 cannot directly perform communication therebetween.

Each of the STAs that can share functions of the AP can exchange information with neighboring STAs using an Action frame or a Management frame that includes information representative of functions for which the STA itself is responsible.

First, a sequence of actions for deciding roles of STAs that are to share functions of the AP is described with reference to a sequence of FIG. 11. It is to be noted that, although actions in which an Action frame and a Beacon frame are used are described here for the convenience of description, a Management frame may be used in place of the frames mentioned.

Here, it is assumed that the user designates the STA 3, which is actable as the AC, so as to act as the AC. The designation that the STA 3 is to be act as the AC is performed, for example, by manipulating the information inputting module 22 of the STA 3.

In the case where the STA 3 is designated so as to act as the AC, it transmits an Action frame including a Role Available Information Element. In the Role Available Information Element included in the Action frame to be transmitted from the STA 3, information representing that the own apparatus can act as the AC is described.

The Action frame transmitted from the STA 3 is received by the STA 1 in step S1 and received by the STA 2 in step S11. Further, the Action frame transmitted from the STA 3 is received by the STA 4 in step S31.

It is assumed that, from among the STAs that receive the Action frame transmitted from the STA 3, for example, the STA 4 is the communication apparatus 11 that is connectable to the Internet.

In this case, in step S32, the STA 4 transmits an Action frame including a Role Available Information Element. In the Role Available Information Element included in the Action frame transmitted from the STA 4, information representing that the STA 4 itself can act as an IG is described.

The Action frame transmitted from the STA 4 is received by the STA 2 in step S12 and received by the STA 3 in step S22. Since the STA 1 and the STA 4 cannot communicate directly with each other, the Action frame transmitted from the STA 4 does not reach the STA 1.

The STA 3 that acts as the AC determines that it becomes possible for the STA 3 to operate the network in which the functions of the AP are distributed in response to that it receives the Action frame transmitted from the STA 4 that acts as the IG.

In step S23, the STA 3 transmits a Beacon frame including the Role Separate Information Element. In the Role Separate Information Element included in the Beacon frame transmitted from the STA 3, information representative of roles of the individual STAs is described.

The STA 3 having transmitted the Beacon frame performs setting for allowing it itself to act as an AC.

The Beacon frame transmitted from the STA 3 is received by the STA 1 in step S2 and is received by the STA 2 in step S13. Further, in step S33, the Beacon frame is received by the STA 4.

The STA 4 having received, in step S33, the Beacon frame transmitted from the STA 3 performs setting for acting as an IG in step S34.

On the other hand, the STA 2 having received, in step S13, the Beacon frame transmitted from the STA 3 thus has successfully received both the signal transmitted from the STA 3 acting as the AC and the signal transmitted from the STA 4 acting as the IG, at a predetermined field strength or more.

In this case, in step S14, the STA 2 performs setting for acting as a Near Station. The STA 2 thus performs transmission and reception of data of the uplink/downlink directly with the IG.

Meanwhile, the STA 1 having received, in step S2, the Beacon frame transmitted from the STA 3 has failed to receive the signal transmitted from the STA 4 acting as the IG, although it has successfully received the signal transmitted from the STA 3 acting as the AC at a predetermined field strength or more.

Since the STA 1 exists in a range in which the signal from the STA 4 does not directly reach, it performs setting for acting as a Far station in step S3. The STA 1 thus performs transmission and reception of data of the uplink/downlink through the relay of the AC.

FIG. 12 is a view depicting an example of a configuration of the Role Available Information Element.

As depicted in FIG. 12, the Role Available Information Element includes IE Type, Length, ESS ID, Own MAC Address, Controller Available, Gateway Available, and Intelligence Available.

IE type indicates a format of the information element.

Length indicates an information length of the information element.

ESS ID indicates an identifier of an extension service set that is set as occasion demands.

Own MAC Address indicates a MAC Address of the own apparatus.

Controller Available is a flag that indicates whether or not the own apparatus is actable as an AC. In the example of FIG. 11, in Controller Available of the Role Available Information Element included in the Action frame transmitted from the STA 3, a value representing that the own apparatus is actable as an AC is set.

Gateway Available is a flag indicating whether or not the own apparatus is actable as an IG. In the example of FIG. 11, in Gateway Available of the Role Available Information Element included in the Action frame transmitted from the STA 4, a value representing that the own apparatus is actable as an IG is placed.

Intelligence Available is a flag indicating whether or not the own apparatus is actable as an IC. As described hereinabove with reference to FIG. 7, in the case where functions of the IC are shared, an STA that is actable as an IC transmits an Action frame including a Role Available Information Element in which a value representing that the own apparatus is actable as an IC is set as a value of Intelligence Available.

By using an Action frame including such various kinds of information as depicted in FIG. 12, each STA can transmit functions for which the own apparatus is responsible to the other STAs. Further, each of the STAs can confirm, on the basis of Action frames transmitted from different STAs, whether or not an STA responsible for functions of the AP exists in the network to which the own apparatus belongs.

FIG. 13 is a view depicting an example of a configuration of the Role Separate Information Element.

As depicted in FIG. 13, in the Role Separate Information Element, IE Type, Length, SSID, ESS ID, Controller Address, Gateway Address, and Intelligence Address are included. IE Type, Length, SSID, and ESS ID are the same as IE Type, Length, SSID, and ESS ID described hereinabove with reference to FIG. 12, respectively.

Controller Address indicates an address of an STA that acts as the AC.

Gateway Address indicates an address of an STA that acts as the IG.

Intelligence Address indicates an address of an STA that acts as the IC.

In the example of FIG. 11, in Controller Address of the Role Separate Information Element included in the Beacon frame transmitted from the STA 3, the address of the STA 3 itself is set, and in Gateway Address, the address of the STA 4 is set. The address of the STA 4 set as Gateway Address is specified by the STA 3 on the basis of Own MAC Address of the Role Available Information Element of an Action frame transmitted, for example, from the STA 4.

By using the Beacon frame including such various kinds of information as depicted in FIG. 13, an STA that acts as the AC can transmit the addresses of the STAs that are responsible for the functions of the AP to the other STAs. Further, each STA can specify the address of each of the other STAs responsible for the functions of the AP and belonging to the network to which the STA itself belongs on the basis of a Beacon frame transmitted thereto from the STA that acts as the AC.

One STA may be responsible for a plurality of functions of the AP. In this case, the same address of the STA is set to two or more of Controller Address, Gateway Address, and Intelligence Address.

Further, it may be made possible to describe addresses of a plurality of IGs in the Role Separate Information Element. In the case where a plurality of STAs each acting as an IG exists in one network, a Beacon frame including Role Separate Information Element in which the individual addresses are described is transmitted from the AC.

At the time of decision of roles of the communication apparatuses 11, transmission and reception of an Action frame that includes such a Role Available Information Element as described above as management information or a Beacon frame that includes such a Role Separate Information Element as described above as management information is performed between the communication apparatuses 11.

Now, a flow of communication between STAs is described with reference to a sequence of FIG. 14.

It is assumed that, by performing the processes described hereinabove with reference to FIG. 11, setting for acting as a Far Station, a Near Station, an AC, and an IG is performed by the STA 1, STA 2, STA 3, and STA 4, respectively.

Data transmitted from the Near Station to an external apparatus is received as Uplink Direct Data directly by the IG as indicated by a white arrow mark A51.

Meanwhile, data transmitted from the Far Station to an external apparatus is received as Uplink Delay Data by the AC as indicated by a white arrow mark A52 and is relayed by the AC such that it is transmitted to the IG as indicated by a white arrow mark A53. The data relayed by the AC is received as Relay Data by the IG.

Further, data transmitted from an external apparatus and destined for the Near Station is transmitted as Downlink Direct Data from the IG directly to the Near Station as indicated by a white arrow mark A54.

On the other hand, data transmitted from an external apparatus and destined for the Far Station is transmitted as Relay Data from the IG to the AC as indicated by a white arrow mark A55 and is relayed by the AC and transmitted to the Far Station as indicated by a white arrow mark A56. The data relayed by the AC is received as Downlink Relay Data by the Far Station.

In this manner, by defining actions of the individual STAs and distributing functions of the AP, efficient control becomes possible.

FIG. 15 is a view depicting an example of the format of a data frame used for transmission and reception of data.

As depicted in FIG. 15, the data frame includes MAC Header, Frame Body, and FCS.

MAC Header includes fields of Frame Control, Duration, Address 1, Address 2, Address 3, Sequence Control, Address 4, QoS Control, HE Control and so forth.

In Frame Control, control information and a format of the frame are described.

In Duration, a duration for the frame and for returning a response is described.

In Address 1, Address 2, Address 3, and Address 4, the address of an STA that serves as a relay destination is described in addition to the address of an STA of a transmission source and the address of an STA of a reception destination when direct transmission is carried out.

In Sequence Control, a parameter such as a sequence number is described.

In QoS Control, a parameter of QoS is described.

In HE Control, a parameter for carrying out high efficiency transmission is described.

In Frame Body, data of a transmission target is included.

In FCS, a parameter for error detection of MAC Header is described.

### <Operation of Each Communication Apparatus>

Processes of a communication apparatus 11 for setting a role in a network are described with reference to flowcharts of FIGS. 16 and 17.

In step S101, the equipment controlling unit 23 (FIG. 8) of the communication apparatus 11 acquires a setting of AP Availability. In the case where there is a setting of AP Availability, it is represented by the setting that the user has designated that the communication apparatus 11 as an AC or that the communication apparatus 11 is connectable to the Internet.

In step S102, the equipment controlling unit 23 decides whether or not there is a setting of AP Availability. In the case where it is decided in step S102 that there is a setting of AP Availability, the equipment controlling unit 23 decides in step S103 whether or not the communication apparatus 11 is designated by the user so as to act as an AC. The decision here is performed on the basis of the setting of AP Availability.

In the case where it is decided in step S103 that the communication apparatus 11 is designated to act as an AC, the network management unit 103 (FIG. 9) of the wireless communication module 25 sets Controller Available in step S104.

In the case where it is designated that the communication apparatus 11 is to act as an AC, information representing this is supplied from the equipment controlling unit 23 to the network management unit 103 through the interface unit 101. The network management unit 103 controls the access controlling unit 105 to cause the management information generation unit 106 to generate an Action frame in which a value representing that the communication apparatus 11 is actable as an AC is set to Controller Available.

On the other hand, in the case where it is decided in step S102 that there is no setting of AP Availability or in the case where it is decided in step S103 that it is not designated that the communication apparatus 11 is to act as an AC, the equipment controlling unit 23 decides in step S105 whether or not there is a connection to the Internet.

In the case where it is decided in step S105 that there is a connection to the Internet, the network management unit 103 sets Gateway Available in step S106.

In the case where it is decided that there is a connection to the Internet, information representing this is supplied from the equipment controlling unit 23 to the network management unit 103 through the interface unit 101. The network management unit 103 controls the access controlling unit 105 to cause the management information generation unit 106 to generate an Action frame in which a value representing that the communication apparatus 11 is actable as an IG is set to Gateway Available.

After an Action frame is generated in step S104 or step S106, the wireless transmission processing unit 109 transmits the Action frame in step S107.

In the case where it is decided in step S105 that there is no connection to the Internet, the processes in steps S106 and S107 are skipped.

In step S108, the wireless reception processing unit 111 performs a reception action of the Action frame transmitted from a neighboring communication apparatus 11. Here, the Action frame transmitted from the communication apparatus 11 that is actable as an AC or the Action frame transmitted from the communication apparatus 11 that is actable as an IG is received.

Data of the Action frame received by the wireless reception processing unit 111 is supplied to and analyzed by the management information processing unit 114. Information representative of a result of the analysis outputted from the management information processing unit 114 is supplied to the network management unit 103 through the access controlling unit 105.

In step S109, the network management unit 103 decides whether or not the own apparatus is actable as an AC and an IG exists in the neighborhood of the own apparatus.

Whether or not an IG exists is decided on the basis of the analysis result supplied from the management information processing unit 114. For example, in the case where, as the value of Gateway Available of Role Available Information Element included in the Action frame transmitted from the different communication apparatus 11, a value representing that the communication apparatus 11 is actable as an IG is set, it is decided that a communication apparatus that is actable as an IG exists in the proximity of the own apparatus.

In the case where it is decided in step S109 that the own apparatus is actable as an AC and an IG exists, the network management unit 103 acquires and sets Gateway Address as an address of the IG in step S110. Gateway Address is represented by Own MAC Address of the Role Available Information Element included in the Action frame transmitted from the communication apparatus 11 that is actable as an IG.

The network management unit 103 performs setting for allowing the own apparatus to act as an AC in step S111. For example, the network management unit 103 sets a transmission timing for a Beacon frame or sets a timing for transmission or reception of data by each STA. Further, the network management unit 103 sets the IG as a transmission destination of the data transmitted from the Far Station.

In step S112, the network management unit 103 controls the access controlling unit 105 to cause the management information generation unit 106 to generate a Beacon frame including the Role Separate Information Element indicating that at least an AC and an IG are decided. In Controller Address of the Role Separate Information Element, the address of the own apparatus is set, and in Gateway Address, the address acquired in step S110 is set.

In step S113, the wireless transmission processing unit 109 transmits a Beacon frame including the Role Separate Information Element and then ends the processing.

On the other hand, in the case where it is decided in step S109 that the own apparatus is not actable as an AC or, although the own apparatus is actable as an AC, a communication apparatus that is actable as an IG does not exist in the neighborhood, the processing advances to step S114.

In step S114, the network management unit 103 decides whether or not the own apparatus is actable as an IG and an AC exists in the proximity of the own apparatus.

Whether or not an AC exists is decided on the basis of a result of analysis supplied from the management information processing unit 114. For example, in the case where, for example, as a value of Controller Available of the Role Available Information Element included in an Action frame transmitted from a different communication apparatus 11, a value representing that the communication apparatus 11 is actable as an AC is set, it is decided that a communication apparatus actable as an AC exists in the neighborhood of the own apparatus.

In the case where it is decided in step S114 that the own apparatus is actable as an IG and an AC exists, the network management unit 103 acquires, in step S115, Controller Address on the basis of the analysis result supplied from the management information processing unit 114 and sets the Controller Address as the address of the AC. Controller Address is represented, for example, by Own MAC Address of the Role Available Information Element included in the Action frame transmitted from a communication apparatus 11 that is actable as an AC.

In step S116, the network management unit 103 performs setting for allowing the own apparatus to act as an IG and then ends the processing. For example, the network management unit 103 performs setting for connecting to the Internet and sets the AC as a relaying destination of data to the Far Station.

On the other hand, in the case where it is decided in step S114 that the own apparatus is not actable as an IG, the processing advances to step S117.

In step S117, the network management unit 103 decides whether or not an AC exists in the network.

In the case where it is decided in step S117 that an AC exists, the network management unit 103 performs setting for allowing the own apparatus to act as an STA belonging to the network in step S118.

After setting for allowing the own apparatus to act as an STA is performed in step S118 or in the case where it is decided in step S117 that a communication apparatus that is actable as an AC does not exist, the processing is ended.

Through the above-described processes performed by the individual communication apparatus 11, a role of each of the communication apparatuses 11 is set.

Now, a setting process of a communication apparatus 11 that is to act as an STA is described with reference to a flowchart of FIG. 18.

The processes of FIG. 18 are processes for setting whether a communication apparatus 11 that acts as an STA is to act as the Near Station or act as the Far Station.

In step S131, the equipment controlling unit 23 acquires the setting of AP Availability.

In step S132, the equipment controlling unit 23 decides whether or not a setting of AP Availability is absent. In the case where it is not designated by the user that the communication apparatus 11 is to act as an AC and the communication apparatus 11 is not connectable to the Internet, it is decided that a setting of AP Availability is absent.

In the case where it is decided in step S132 that a setting of AP Availability is absent, in step S133, the wireless reception processing unit 111 performs a reception action of an Action frame transmitted from a neighboring communication apparatus 11.

Here, the Action frame transmitted from the AC or the Action frame transmitted from the IG is received. Data of the Action frame received by the wireless reception processing unit 111 is supplied to the management information processing unit 114, by which management information included in the Action frame is analyzed. Information regarding a result of the analysis by the management information processing unit 114 is supplied from the management information processing unit 114 to the network management unit 103.

In step S134, the network management unit 103 decides whether or not an Action frame transmitted from the AC is received.

In the case where it is decided in step S134 that an Acton frame transmitted from the AC is received, the network management unit 103 registers the AC in step S135. For example, an address represented by Own MAC Address of the Role Available Information Element included in the Action frame transmitted from the AC is registered as the address of the AC.

In the case where it is decided in step S134 that an Action frame transmitted from the AC is not received, the process in step S135 is skipped.

In step S136, the network management unit 103 decides whether or not an Action frame transmitted from the IG is received.

In the case where it is decided in step S136 that an Action frame transmitted from the IG is received, the network management unit 103 registers the IG in step S137. For example, the address represented by Own MAC Address of the Role Available Information Element included in the Action frame transmitted from the IG is registered as the address of the communication apparatus that is communicatable as the IG.

In step S138, the network management unit 103 performs setting for allowing the own apparatus to act as the Near Station. For example, information representing that the transmission destination of uplink data is the IG and other information are managed by the network management unit 103. Thereafter, the processing of FIG. 18 is ended.

In the case where it is decided in step S136 that an Action frame transmitted from the IG is not received, the wireless reception processing unit 111 performs a reception action of a Beacon frame in step S139.

Data of the Beacon frame received by the wireless reception processing unit 111 is supplied to the management information processing unit 114, by which management information included in the Beacon frame is analyzed. Information regarding a result of the analysis by the management information processing unit 114 is supplied from the management information processing unit 114 to the network management unit 103.

In step S140, the network management unit 103 decides whether or not a Beacon frame transmitted from a communication apparatus that acts as the AC is received.

In the case where it is decided in step S140 that a Beacon frame transmitted from a communication apparatus that acts as the AC is received, the network management unit 103 registers the IG in step S141. Here, the address represented by Gateway Address of the Role Separate Information Element included in the Beacon frame is registered as the address of the communication apparatus that acts as the IG.

In step S142, the network management unit 103 performs setting for allowing the own apparatus to act as a Far Station. For example, information representing that the transmission destination of uplink data is set to the AC and like information are managed by the network management unit 103. Thereafter, the processing of FIG. 18 is ended.

In the case where it is decided in step S132 that a setting of AP Availability exists or also in the case where it is decided in step S140 that a Beacon frame is not received, the process is ended similarly.

By causing part of functions of the AP to be shared by a plurality of communication apparatuses 11 through the processes described above, it is possible to cause a communication apparatus 11, which is located in the proximity of the center of a range desired by the user, to have functions of the AC. Thus, the transmission power of radio waves in the entire network can be optimized.

Meanwhile, a communication apparatus 11 designated to act as the AC by the user can control communication in an external network even in the case where it is not directly connected to the network. Such a communication apparatus 11 as is to act as the AC can be designated by the user without regard to the positional relation with other communication apparatuses 11.

By causing functions of the IG to be shared by a plurality of communication apparatuses 11, it is possible to implement Internet access by an optimum route according to a situation of traffic of communication, the connection cost and so forth.

### <Different Example of General Action of Network>

As described hereinabove with reference to FIG. 7, it is possible to cause an authentication function of a network or a function for processing an entry request into the network to be shared by a predetermined communication apparatus 11.

A series of actions for sharing functions of the AP and deciding roles of individual STAs is described with reference to a sequence of FIG. 19.

In the example of FIG. 19, actions of the STAs 1 to 6 are depicted. The STAs 1 to 6 have a positional relation arranged in order from the left, for example, as described hereinabove with reference to FIG. 10. It is assumed that, although each of the STAs can directly perform communication with an STA three STAs ahead, it cannot communicate with any STA after that. In particular, the STA 1 and the STA 5 cannot directly perform communication therebetween.

Further, it is assumed that the STA 6 from among the STAs 1 to 6 existing within a range of a network desired by the user does not enter the network but acts as an OBSS STA.

Here, it is assumed that the user designates the STA 3, which is actable as an AC, to act as an AC. The designation for acting as an AC is performed, for example, by manipulation of the information inputting module 22 of the STA 3.

In the case where the STA 3 is designated to act as an AC, the STA 3 transmits an Action frame including a Role Available Information Element in step S221. In the Role Available Information Element included in the Action frame transmitted from the STA 3, information representing that the own apparatus is actable as an AC is described.

The Action frame transmitted from the STA 3 is received by the STA 1 in step S201 and received by the STA 2 in step S211. Further, the Action frame transmitted from the STA 3 is received by the STA 4 in step S231, received by the STA 5 in step S241, and received by the STA 6 in step S251.

It is assumed that, from among the STAs receiving the Action frame transmitted from the STA 3, for example, the STA 5 is a communication apparatus 11 that is connectable to the Internet.

In this case, in step S242, the STA 5 transmits an Action frame including a Role Available Information Element. In the Role Available Information Element included in the Action frame transmitted from the STA 5, information representing that the own apparatus acts as an IG is described.

The Action frame transmitted from the STA 5 is received by the STA 2 in step S212 and received by the STA 3 in step S222. Further, the Action frame transmitted from the STA 5 is received by the STA 4 in step S232 and received by the STA 6 in step S252. Since the STA 1 and the STA 5 cannot communicate directly with each other, the Action frame transmitted from the STA 5 does not reach the STA 1.

In the case where acting as an IC is designated by the user, for example, in step S233, the STA 4 transmits an Action frame including the Role Available Information Element. In the Role Available Information Element included in the Action frame transmitted from the STA 4, information representing that the own apparatus acts as an IC.

The Action frame transmitted from the STA 4 is received by the STA 1 in step S202 and received by the STA 2 in step S213. Further, the Action frame transmitted from the STA 4 is received by the STA 3 in step S223, received by the STA 5 in step S243 and received by the STA 6 in step S253.

The STA 3 that acts as an AC determines that it is made possible to operate the network in which functions of the AP are distributed to the three of the AC, IG, and IC in response to reception of the Action frame transmitted from the STA 5 that acts as an IG and the Action frame transmitted from the STA 4 that acts as an IC.

In step S224, the STA 3 transmits a Beacon frame including the Role Separate Information Element. In the Role Separate Information Element included in the Beacon frame transmitted from the STA 3, information representative of the roles of the individual STAs is described.

The STA 3 having transmitted the Beacon frame performs setting for acting as an AC in step S225.

The Beacon frame transmitted from the STA 3 is received by the STA 1 in step S203 and received by the STA 2 in step S214. Further, the Beacon frame transmitted from the STA 3 is transmitted by the STA 4 in step S234, received by the STA 5 in step S244, and received by the STA 6 in step S254.

The STA 1 having received, in step S203, the Beacon frame transmitted from the STA 3 has not received the signal transmitted from the STA 5 that acts as an IG although it has received the signal transmitted from the STA 3 that acts as an AC at a predetermined field strength or more.

Since the STA 1 exists in a range in which a signal from the STA 5 does not reach directly, it performs setting for acting as a Far Station in step S204. The STA 1 will thus perform transmission and reception of uplink/downlink data through relay of the AC.

The STA 2 having received, in step S214, the Beacon frame transmitted from the STA 3 thus has successfully received both the signal transmitted from the STA 3 acting as an AC and the signal transmitted from the STA 5 acting as an IG at a predetermined field strength or more.

In this case, in step S215, the STA 2 performs setting for acting as a Near Station. The STA 2 performs transmission and reception of uplink/downlink data directly with the IG.

The STA 4 having received, in step S234, the Beacon frame transmitted from the STA 3 performs setting for acting as an IC in step S235.

The STA 5 having received, in step S244, the Beacon frame transmitted from the STA 3 performs setting for acting as an IG in step S245.

The STA 6 having received, in step S254, the Beacon frame transmitted from the STA 3 determines that it does not enter the network of the AC from which the Beacon frame has been transmitted and performs setting for acting as an OBSS Station in step S255. In other words, the STA 6 continues reception of a Beacon frame or an Action frame transmitted from a communication apparatus other than the AC.

In this manner, also in the case where a communication apparatus 11 that is to act as an IC is set, processes similar to the processes described hereinabove with reference to FIG. 11 and so forth are performed.

Now, a modification of the flow of communication between STAs is described with reference to a sequence of FIG. 20.

It is assumed that, since the processes described hereinabove with reference to FIG. 19 are performed, in the STAs 1 to 6, setting for allowing them to act as a Far Station, a Near Station, an AC, an IC, an IG, and an OBSS Station, respectively, has been performed.

In the case where the STA 1 that acts as a Far Station or the STA 2 that acts as a Near Station issues a request for entry into the network, an Association Request that is the request is transmitted to the STA 4 that acts as the IC. The STA 4 performs a process for the Association Request and transmits Association Response to the STA 1 or the STA 2 from which the Association Request has been transmitted. It is to be noted that, since the STA 6 that acts as an OBSS station does not enter the network, an Association Request is not transmitted, and in communication exchanged after that, the signal is treated as a signal from the OBSS Station.

The STA 1 that acts as a Far Station transmits Association Request to the STA 4 that acts as an IC in step S301.

The Association Request transmitted from the STA 1 is received by the STA 4 in step S333. In the case where entry into the network is to be admitted, in step S334, the STA 4 transmits Association Request representing that the entry into the network is admitted.

The Association Response transmitted from the STA 4 is received by the STA 1 in step S302 and is received by the STA 3 acting as an AC in step S321. Further, the Association Response transmitted from the STA 4 is received by the STA 5 acting as an IG in step S341.

On the other hand, the STA 2 that acts as a Near Station transmits an Association Request to the STA 4 that acts as an IC in step S311.

The Association Request transmitted from the STA 2 is received by the STA 4 in step S335. In the case where entry into the network is to be admitted, the STA 4 transmits an Association Response representing that entry into the network is admitted in step S336.

The Association Response transmitted from the STA 4 is received by the STA 2 in step S312 and is received by the STA 3 acting as an AC in step S322. Further, the Association Response transmitted from the STA 4 is received by the STA 5 acting as an IG in step S342.

Since the Association Response is transmitted to both the STA 3 that acts as an AC and the STA 5 that acts as an IG in this manner, the IC can share information with the AC and the IG.

Also, network authentication to be performed by the STA 4 acting as an IC is performed in a similar manner as in such an action for an entry request as described above.

A flow of communication after that is similar to the flow described hereinabove with reference to FIG. 14.

In particular, data transmitted from a Near Station to an external apparatus is directly received as Uplink Direct Data by the IG as indicated by a white arrow mark A101.

On the other hand, data transmitted from a Far Station to an external apparatus is received as Uplink Relay Data by the AC as indicated by a white arrow mark A102 and is transmitted to the IG as indicated by a white arrow mark A103 by relay by the AC. The data relayed by the AC is received as Relay Data by the IG.

Meanwhile, data transmitted from an external apparatus and destined for a Near Station is directly received as Downlink Direct Data from the IG to the Near Station as indicated by a white arrow mark 104.

On the other hand, data transmitted from an external apparatus and destined for a Far Station is transmitted as Relay data from the IG to the AC as indicated by a white arrow mark A105 and is transmitted to a Far Station as indicated by a white arrow mark A106 by relay by the AC. The data relayed by the AC is received as Downlink Relay Data by the Far Station.

By setting a communication apparatus 11 that is to act as an IC and causing an action such as network authentication to be performed by the communication apparatus 11 having a high processing capability in this manner, the burden on the other communication apparatuses 11 can be reduced.

<Modification>

Although cases in which functions of an AC, functions of an IG, and functions of an IC are distributed are described, functions of an AP may be further subdivided and the subdivided functions may be distributed to a greater number of communication apparatuses 11.

### •Example of Configuration of Computer

While the series of processes described above can be executed by hardware, it can otherwise be executed also by software. In the case where the series of processes is executed by software, a program that constructs the software is installed from a program recording medium into a computer incorporated in hardware for exclusive use, a personal computer for universal use or the like.

FIG. 21 is a block diagram depicting an example of a hardware configuration of a computer that executes the series of processes described hereinabove in accordance with a program.

A CPU (Central Processing Unit) 1001, a ROM (Read Only Memory) 1002, and a RAM (Random Access Memory) 1003 are connected to one another by a bus 1004.

Further, an input/output interface 1005 is connected to the bus 1004. To the input/output interface 1005, an inputting unit 1006 including a keyboard, a mouse and so forth and an outputting unit 1007 including a display, a speaker and so forth are connected. Further, a storage unit 1008 including a hard disk, a nonvolatile memory and so forth, a communication unit 1009 including a network interface and so forth and a drive 1010 for driving a removable medium 1011 are connected to the input/output interface 1005.

In the computer configured in such a manner as described above, the CPU 1001 loads a program stored, for example, in the storage unit 1008 into the RAM 1003 through the input/output interface 1005 and the bus 1004 and executes the program to perform the series of processes described above.

The program to be executed by the CPU 1001 can be recorded on and provided as, for example, the removable medium 1011 or is provided through a wired or wireless transmission medium such as a local area network, the Internet or a digital broadcast, and is installed into the storage unit 1008.

It is to be noted that a program to be executed by a computer may be a program by which processes are carried out in a time series in the order as described in the present specification or may be a program by which processes are executed in parallel or individually at necessary timings such as when calling of the same is performed.

In the present specification, the term system is used to signify an aggregation of a plurality of components (devices, modules (parts) and so forth) and it does not matter whether or not all components are accommodated in the same housing. Accordingly, a plurality of apparatuses accommodated in separate housings and connected to each other through a network is a system, and also one apparatus in which a plurality of modules is accommodated in a single housing is a system.

It is to be noted that the advantageous effects described in the present specification are exemplary to the last and are not restrictive, and other advantageous effects may be available.

The embodiment of the present technology is not limited to the embodiment described hereinabove and allows various alterations without departing from the subject matter of the present technology.

For example, the present technology can assume a configuration for cloud computing by which a plurality of apparatuses shares and cooperatively process one function through a network.

Further, each of the steps described in connection with the flowcharts described hereinabove can be executed by a single apparatus or can be shared and executed by a plurality of apparatuses.

Furthermore, in the case where a plurality of processes is included in one step, the plurality of processes included in the one step can be executed by one apparatus or can be shared and executed by a plurality of apparatuses.

### •Examples of Combination in Configuration

The present technology can also take such configurations as described below.
(1) A communication apparatus, including:
   a communication controlling unit configured to control transmission of a management frame including information representing that the communication apparatus itself is actable as an apparatus that is responsible for a function of access control of a wireless local area network, the transmission including transmission of a beacon frame; and
   a management unit configured to manage information regarding apparatuses that are individually responsible for functions including the function of access control.
(2) The communication apparatus according to (1) above, in which
   the management frame further includes information representative of whether or not the communication apparatus is actable as an apparatus that is responsible for a function of a gateway of the wireless local area network to an external network.
(3) The communication apparatus according to (1) or (2) above, in which
   the communication controlling unit controls reception of the management frame transmitted from a different apparatus, and
   the management unit sets, in a case where the management frame including information representing that a predetermine apparatus is actable as an apparatus that is responsible for a function of the gateway is received, information relating to the apparatus that is responsible for the function of the gateway.
(4) The communication apparatus according to any one of (1) to (3) above, in which
   the management unit causes the management frame to be transmitted, the management frame including an address of the communication apparatus itself that is responsible for a function of the access control and an address of the predetermined apparatus that is responsible for the function of the gateway.
(5) The communication apparatus according to any one of (1) to (4) above, in which
   the communication controlling unit controls relay of communication that is performed between the predetermined apparatus that is responsible for a function of the gateway and a remote apparatus that belongs to the wireless local area network and exists outside a reaching range of radio waves of the predetermined apparatus.
(6) The communication apparatus according to any one of (1) to (5) above, in which
   the communication controlling unit controls transmission power of radio waves within a range within which communication with the predetermined apparatus is possible.
(7) The communication apparatus according to any one of (2) to (6) above, in which
   the management frame further includes information representing whether or not the communication apparatus is actable as an apparatus that is responsible for at least one of an authentication function in the wireless local area network or a processing function of an entry request into the wireless local area network.
(8) A communication method, including:
   controlling transmission of a management frame including information representing that an apparatus itself is actable as an apparatus that is responsible for a function of access control of a wireless local area network, the transmission including transmission of a beacon frame; and
   managing information regarding apparatuses that are individually responsible for functions including the function for the access control.
(9) A communication apparatus, including:
   a communication controlling unit configured to control transmission of a management frame including information representing that the communication apparatus itself is actable as an apparatus that is responsible for a function of a gateway of a wireless local area network to an external network; and
   a management unit configured to manage information regarding apparatuses that are individually responsible for functions including the function of the gateway.
(10) The communication apparatus according to (9) above, in which
   the management frame further includes information representing whether or not the communication apparatus is actable as an apparatus that is responsible for a function of access control of the wireless local area network including transmission of a beacon frame.
(11) The communication apparatus according to (9) or (10) above, in which
   the communication controlling unit controls reception of the management frame transmitted from a different apparatus, and,
   in a case where the management frame including information representing that a predetermined apparatus is actable as an apparatus that is responsible for a function of the access control is received, the management unit causes the management frame to be transmitted.
(12) The communication apparatus according to any one of (9) to (11) above, in which
   the communication controlling unit controls reception of a beacon frame that is transmitted from the predetermined apparatus that is responsible for a function of the access control and includes an address of the predetermined apparatus and an address of the communication apparatus itself as an apparatus that is responsible for the function of the gateway.
(13) The communication apparatus according to any one of (9) to (12) above, in which
   the communication controlling unit controls transmission power of radio waves within a range within which communication with the predetermined apparatus is possible.
(14) A communication method, including:
   controlling transmission of a management frame including information representing that an apparatus itself is actable as an apparatus that is responsible for a function of a gateway of a wireless local area network to an external network; and
   managing information regarding apparatuses that are individually responsible for functions including the function of the gateway.
(15) A communication apparatus, including:
   a communication controlling unit configured to control reception of a management frame transmitted from a first apparatus and including information representing that the first apparatus is actable as an apparatus that is responsible for a function of access control of a wireless local area network, the transmission including transmission of a beacon frame; and
   a management unit configured to manage information regarding apparatuses that belong to the wireless local area network in which at least the first apparatus and a second apparatus that is responsible for a function of a gateway of the wireless local area network to an external network exist.
(16) The communication apparatus according to (15) above, in which,
   in a case where the management frame transmitted from the second apparatus and including information representing that the second apparatus is actable as an apparatus that is responsible for a function of the gateway is received, the management unit performs setting for acting as a neighboring apparatus that directly performs communication with the second apparatus.
(17) The communication apparatus according to (15) above, in which,
   in a case where the management frame transmitted from the second apparatus is not received, the management unit performs setting for acting as a remote apparatus that performs communication with the second apparatus through the first apparatus.
(18) A communication method, including:
   controlling reception of a management frame transmitted from a first apparatus and including information representing that the first apparatus is actable as an apparatus that is responsible for a function of access control of a wireless local area network, the transmission including transmission of a beacon frame; and
   managing information regarding apparatuses that belong to the wireless local area network in which at least the first apparatus and a second apparatus that is responsible for a function of a gateway of the wireless local area network to an external network exist.
(19) A communication system, including:
   a communication apparatus including
      a communication controlling unit configured to control transmission of a management frame including information representing that the communication apparatus itself is actable as an apparatus that is responsible for a function of access control of a wireless local area network, the transmission including transmission of a beacon frame, and
      a management unit configured to manage information regarding apparatuses that are individually responsible for functions including the function of access control, and
   a different communication apparatus including
   a communication controlling unit configured to control transmission of the management frame including information representing that the different communication apparatus itself is actable as an apparatus that is responsible for a function of a gateway of the wireless local area network to an external network, and
   a management unit configured to manage information regarding apparatuses that are individually responsible for functions including the function of the gateway.

### [Reference Signs List]

11 Communication apparatus, 21 Internet connection module, 22 Information inputting module, 23 Equipment controlling unit, 24 Information outputting module, 25 Wireless communication module, 51 Inputting and outputting unit, 52 Communication controlling unit, 53 Baseband processing unit, 101 Interface unit, 102 Transmission buffer, 103 Network management unit, 104 Transmission frame construction unit, 105 Access controlling unit, 106 Management information generation unit, 107 Transmission timing controlling unit, 108 Transmission power controlling unit, 109 Wireless transmission processing unit, 110 Antenna controlling unit, 111 Wireless reception processing unit, 112 Detection threshold value controlling unit, 113 Reception timing controlling unit, 114 Management information processing unit, 115 Reception data construction unit, 116 Reception buffer

## Claims

1. A communication apparatus, comprising:
a communication controlling unit configured to control transmission of a management frame including information representing that the communication apparatus itself is actable as an apparatus that is responsible for a function of access control of a wireless local area network, the transmission including transmission of a beacon frame; and
a management unit configured to manage information regarding apparatuses that are individually responsible for functions including the function of access control.

2. The communication apparatus according to claim 1, wherein
the management frame further includes information representative of whether or not the communication apparatus is actable as an apparatus that is responsible for a function of a gateway of the wireless local area network to an external network.

3. The communication apparatus according to claim 2, wherein
the communication controlling unit controls reception of the management frame transmitted from a different apparatus, and
the management unit sets, in a case where the management frame including information representing that a predetermine apparatus is actable as an apparatus that is responsible for a function of the gateway is received, information relating to the apparatus that is responsible for the function of the gateway.

4. The communication apparatus according to claim 3, wherein
the management unit causes the management frame to be transmitted, the management frame including an address of the communication apparatus itself that is responsible for a function of the access control and an address of the predetermined apparatus that is responsible for the function of the gateway.

5. The communication apparatus according to claim 3, wherein
the communication controlling unit controls relay of communication that is performed between the predetermined apparatus that is responsible for a function of the gateway and a remote apparatus that belongs to the wireless local area network and exists outside a reaching range of radio waves of the predetermined apparatus.

6. The communication apparatus according to claim 3, wherein
the communication controlling unit controls transmission power of radio waves within a range within which communication with the predetermined apparatus is possible.

7. The communication apparatus according to claim 2, wherein
the management frame further includes information representing whether or not the communication apparatus is actable as an apparatus that is responsible for at least one of an authentication function in the wireless local area network or a processing function of an entry request into the wireless local area network.

8. A communication apparatus, comprising:
a communication controlling unit configured to control transmission of a management frame including information representing that the communication apparatus itself is actable as an apparatus that is responsible for a function of a gateway of a wireless local area network to an external network; and
a management unit configured to manage information regarding apparatuses that are individually responsible for functions including the function of the gateway.

9. The communication apparatus according to claim 8, wherein
the management frame further includes information representing whether or not the communication apparatus is actable as an apparatus that is responsible for a function of access control of the wireless local area network including transmission of a beacon frame.

10. The communication apparatus according to claim 9, wherein
the communication controlling unit controls reception of the management frame transmitted from a different apparatus, and
in a case where the management frame including information representing that a predetermined apparatus is actable as an apparatus that is responsible for a function of the access control is received, the management unit causes the management frame to be transmitted.

11. The communication apparatus according to claim 10, wherein
the communication controlling unit controls reception of a beacon frame that is transmitted from the predetermined apparatus that is responsible for a function of the access control and includes an address of the predetermined apparatus and an address of the communication apparatus itself as an apparatus that is responsible for the function of the gateway.

12. The communication apparatus according to claim 10, wherein
the communication controlling unit controls transmission power of radio waves within a range within which communication with the predetermined apparatus is possible.

13. A communication apparatus, comprising:
a communication controlling unit configured to control reception of a management frame transmitted from a first apparatus and including information representing that the first apparatus is actable as an apparatus that is responsible for a function of access control of a wireless local area network, the transmission including transmission of a beacon frame; and
a management unit configured to manage information regarding apparatuses that belong to the wireless local area network in which at least the first apparatus and a second apparatus that is responsible for a function of a gateway of the wireless local area network to an external network exist.

14. The communication apparatus according to claim 13, wherein,
in a case where the management frame transmitted from the second apparatus and including information representing that the second apparatus is actable as an apparatus that is responsible for a function of the gateway is received, the management unit performs setting for acting as a neighboring apparatus that directly performs communication with the second apparatus.

15. The communication apparatus according to claim 13, wherein,
in a case where the management frame transmitted from the second apparatus is not received, the management unit performs setting for acting as a remote apparatus that performs communication with the second apparatus through the first apparatus.

16. A communication system, comprising:
a communication apparatus including
a communication controlling unit configured to control transmission of a management frame including information representing that the communication apparatus itself is actable as an apparatus that is responsible for a function of access control of a wireless local area network, the transmission including transmission of a beacon frame, and
a management unit configured to manage information regarding apparatuses that are individually responsible for functions including the function of access control, and
a different communication apparatus including
a communication controlling unit configured to control transmission of the management frame including information representing that the different communication apparatus itself is actable as an apparatus that is responsible for a function of a gateway of the wireless local area network to an external network, and
a management unit configured to manage information regarding apparatuses that are individually responsible for functions including the function of the gateway.
